# EUROPEAN PATENT SPECIFICATION

(11) **EP 3 656 704 B1**
(45) Date of publication and mention of the grant of the patent: **13.09.2023**
(21) Application number: 18382832.6
(22) Date of filing: 20.11.2018
(51) Int. Cl.: B65G 17/12, F16G 3/06

(54) **BELT ATTACHMENT FOR BUCKET ELEVATORS**
GURTBEFESTIGUNG FÜR BECHERWERKEN
FIXATION DE COURROIE POUR ASCENSEURS À GODET

(43) Date of publication of application: 27.05.2020
(73) Proprietor: Tarma Bulk Solids Solutions, S.L., 28760 Tres Cantos (ES)
(72) Inventor: GARCIA FLOREN, Jesus, 28760 Tres Cantos (ES)
(74) Representative: González López-Menchero, Álvaro Luis

(56) References cited:
- EP-A2- 0 221 818
- EP-A2- 0 221 819
- CN-U- 203 384 287

## Description

### OBJECT OF THE INVENTION

The object of the present invention, as established by the title of the document, is a belt attachment for bucket elevators, in other words, it relates to a device that attaches or connects the belt or strip in order to lock it in bucket elevators.

The present invention is characterized by the special configuration and design of the pieces that form part of the attachment in order to achieve a firm, effective and safe attachment, without ruptures, gaps or wear to the belt or strip that would damage the bucket elevator and preventing the attachment from breaking.

Thus, the present invention lies within the field of attachment pieces for highly resistant belts or strips, preferably with a metal and textile cores.

### BACKGROUND OF THE INVENTION

A bucket elevator is a mechanism that is used to vertically carry or handle bulk materials (as in the case of grains, seeds, fertilizers, minerals, etc.).

It is the vertical equivalent to the conveyor belt. The elements that make up a bucket elevator are:
- Buckets for vertically transporting the bulk material.
- A conveyor belt, strip or chain to which the buckets are fastened in order to move the same.
- Actuation and rotation means for the equipment (geared motor).
- The part of the equipment designed to receive the material and fill the buckets and the part of the equipment for unloading the product, called heads.
- The system for maintaining tension on the lower part of the elevator.
- Boxes to enclose all of the equipment.
- Security systems

In the state of the art, the attachment devices designed to attach belts or strips that attach the buckets of an elevator are different, yet all of them aim to achieve a firm and resistant attachment that prevents the two ends of the belt from coming loose.

In general, the belt attachment for bucket elevators of the state of the art comprises:
- An upper lock.
- A lower lock.
- A central piece in the shape of a wedge introduced through the opening of the ends of the belt sections to be joined and placed between both ends of the same, the entire assembly, the upper and lower locks, the ends of the belt and central piece being secured by attachment means that pass through all of the elements.

The upper and lower clamps have a symmetrical form with respect to a horizontal shaft that passes through the central piece in the shape of a wedge, and in a possible preferred embodiment have a curved profile in the opening thereof and on the outside have a stepped profile having a greater width in the area of the entrance of the ends of the belt to be attached.

In general, said attachment is complemented by a highly resistant cable clamp, wherein said clamp is formed by one bolt, two bolts or even three bolts, the number of bolts used in the cable clamp not being limited.

However, in said highly resistant cable clamps the resistance is directly proportional to the force applied to the clamping bolts, possibly damaging the structure of the cables by the action of the clamping bolts, and even this fastening not being sufficiently effective, able to cause the cables to slip. In the state of the art are known the documents

EP0221818 discloses a fastening device for splicing belts which comprise reinforcing elements made of manmade fabric or metal cords, characterized by the fact that it consists of two lateral plates (1) each comprising on its upper part an end zone (4) forming an angle A of between 15 DEG and 75 DEG with the clamping plane. EP0221818 discloses the features of the preamble of claim 1.

EP0221819 discloses a fastening device for splicing belts, which include reinforcement elements fashioned of a synthetic textile or metal cord. The fastening device includes two lateral plates provided, in lower areas thereof, with retainer irons, and two intermediate plates, which are provided, at an upper portion thereof, with an end zone of a rounded shape.

Therefore, the object of the invention is to develop a gripping system for the cables in which the clamping bolts do not directly intervene in the structure of the cable, developing a belt attachment for bucket elevators such as the one that is described below, the essential nature of which is included in claim one.

### DESCRIPTION OF THE INVENTION

The belt attachment for bucket elevators has a part that is common to several conventional connections that comprises an upper lock, another lower lock, and an intermediate piece wedged between both locks, defining a space between the intermediate wedged piece and each one of the locks, through which the ends of the belt are clamped by bolts.

The attachment has two progressive fasteners that grip the mechanical part of the belt which must be stripped and left bare. This core can be made of steel cables or a textile cloth.

The progressive fasteners are a proportional tightening assembly based on an eccentric such that, by rotating due to the traction effect of the cables, and by the very geometry thereof, it progressively clamps the core of the belt (cables) against an extension piece of the connection.

Said cable clamps are made up of three pieces: an upper piece, another lower piece and a central piece, the surfaces in contact having a complementary castellated profile defining spaces between the pieces through which the cable passes, said pieces being attached by attachment means, which in a possible embodiment can be bolts and nuts.

Thanks to the configuration described, the ends of the belt, in particular the core of the same (either being steel cables or a textile cloth), does not slip by the action of the stresses to which it is subjected.

Except when indicated otherwise, all of the technical and scientific elements used in this specification have the meaning commonly understood by one with average skill in the art to which this invention belongs. When this invention is put into practice, methods and materials may be used that are similar or equivalent to the ones described in this specification.

Throughout the description and the claims, the term "comprises" and its variants do not aim to exclude other technical characteristics, additions, components or steps. For those skilled in the art, other objects, advantages and characteristics of the invention may be deduced from both the description and the practical use of the invention.

### EXPLANATION OF THE DRAWINGS

As a complement to the present description, and for the purpose of helping to make the characteristics of the invention more readily understandable, in accordance with a preferred practical exemplary embodiment thereof, said description is accompanied by a set of drawings constituting an integral part of the same, which by way of illustration and not limitation represent the following:
In figure 1, we can see a cross-sectional view of the belt attachment object of the invention.
Figure 2 shows a representation of the attachment in perspective wherein the core of the belt is shown, which in this case consists of steel cables that are clamped.
Figures 3, 4 and 5 show the locking process of the eccentric on the core of the cables.

### PREFERRED EMBODIMENT OF THE INVENTION

In reference to the figures, a preferred embodiment of the invention proposed is described below.

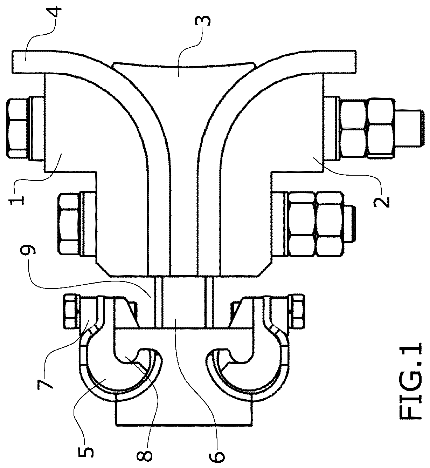

Figure 1 shows the belt attachment, wherein said attachment comprises:
- An upper lock (1).
- A lower lock (2).
- A central piece (3) in the form of a wedge introduced through the opening of the ends of the belt sections to be attached and placed between both ends of the same, the entire assembly, the upper (1) and lower locks (2), ends of the belt (4) and central piece (3) being secured by attachment means that pass through all of the elements.

The upper (1), lower (2) and central locking pieces (3) can be made of stainless steel, the manufacturing material of said pieces, however, not being limited.

Moreover, and in a distinctive way, the belt attachment comprises a progressive tightening assembly based on the use of an eccentric (5).

Said tightening assembly comprises a piece (6) arranged after the previous connection and which has arms (8) on which the eccentric wheel (5) rotates and which press the core (9) of the belt between the piece (6) and the eccentric wheel (5). The end of the core (9) of the belt (4) is retained at the end thereof by a bolt (7).

Since the wheel is an eccentric wheel (5), when the same rotates in the direction of the arrow, the eccentric wheel (5) presses the core (9) of the belt (4) against the piece (6), preventing the core (9) from slipping when the core cables (9) tend to slip due to the stresses of the belt.

With the system described, it is not the bolts that structurally grip the cables or cloth, but rather the it is the mechanism of the eccentric that causes the cables to be clamped by rotating the same, by reducing the distance between the walls of the eccentric wheel (5) and the piece (6) as it rotates, as was previously explained and shown in this figure.

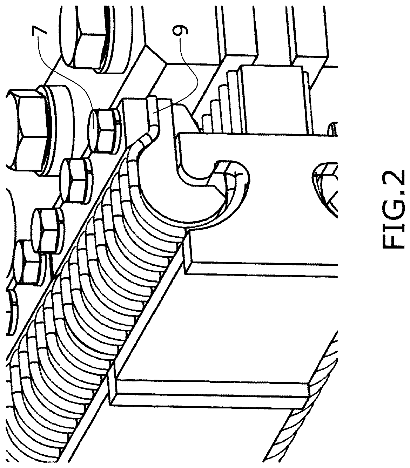

Figure 2 shows a perspective view of the belt attachment for bucket elevators object of the invention, wherein one can see the core (9) of the belt (4) and how it is attached by one or several bolts (7).

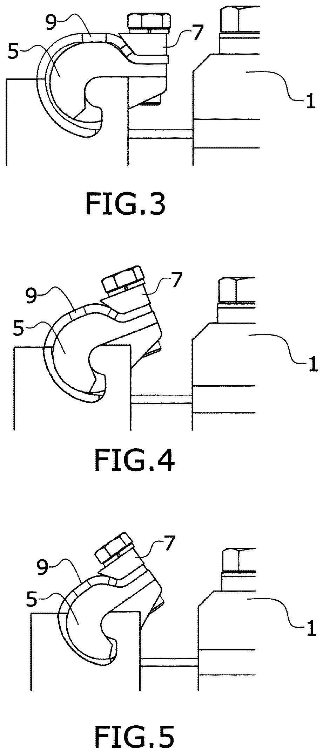

Figures 3, 4 and 5 show how increasing the tension of the core (9) causes the rotation of the eccentric wheel, making it rotate on the arm (8). The center of rotation of the eccentric wheel (5) on the arm (8) makes the surface of said eccentric wheel (5) move towards the concavity of the piece (6), thereby clamping the core (9) of the cables of the belt, and therefore the tighter they are, the more the eccentric wheel (5) will move towards the piece (6) and the greater the pressure will be on the core (9) of the cables of the belt.

The progressive process of "locking" and clamping the cables by the eccentric wheel (5) is shown in figures 3, 4 and 5.

## Claims

1. A belt attachment for bucket elevators that has:
- An upper lock (1),
- A lower lock (2),
- A central piece (3) in the shape of a wedge introduced through the opening of the ends of the sections of the belt (4) to be attached and placed between both ends of the same, the entire assembly, the upper (1) and lower locks (2), the ends of the belt (4) and central piece (3) being secured by attachment means that pass through all of the elements, **characterized in that** the belt attachment comprises a progressive tightening assembly based on the use of an eccentric piece (5),
wherein said progressive tightening assembly comprises a piece (6) arranged after the connection formed by the upper (1) and lower (2) locking pieces and the central wedged piece (3) and which has arms (8) on which the eccentric piece (5) rotates and which by rotating, presses and clamps the core (9) of the belt between the piece (6) and the eccentric piece (5).

2. The belt attachment for bucket elevators according to claim 1, **characterized in that** the attachment means that pass through the pieces and the attachment belt are bolts and the corresponding nuts thereof.

3. The belt attachment for bucket elevators according to any one of the preceding claims, **characterized in that** the end of the core (9) of the belt, formed by steel cables, is retained on the end thereof by one or several bolts (7).

## Patentansprüche

1. Eine Riemenbefestigung für Becherwerke, die Folgendes aufweist:
- ein oberes Schloss (1),
- ein unteres Schloss (2),
- ein zentrales Stück (3) in Form eines Keils, das durch die Öffnung der Enden der zu befestigenden Abschnitte des Riemens (4) eingeführt und zwischen den beiden Enden desselben angeordnet ist, wobei die gesamte Anordnung, das obere (1) und das untere Schloss (2), die Enden des Riemens (4) und das zentrale Stück (3) durch Befestigungsmittel gesichert sind, die durch alle Elemente hindurchgehen, **dadurch gekennzeichnet, dass** die Riemenbefestigung eine progressive Spannanordnung umfasst, die auf der Verwendung eines exzentrischen Stücks (5) beruht,
wobei die progressive Spannanordnung ein Stück (6) umfasst, das nach
der durch das obere (1) und untere (2) Verriegelungsstück und das zentrale Keilstück (3) gebildeten Verbindung angeordnet ist und das Arme (8) aufweist, auf denen sich das exzentrische Stück (5) dreht und das durch Drehung den Kern (9) des Riemens zwischen das Stück (6) und das exzentrische Stück (5) drückt und einklemmt.

2. Riemenbefestigung für Becherwerke nach Anspruch 1, **dadurch gekennzeichnet, dass** die Befestigungsmittel, die durch die Stücke und den Befestigungsriemen hindurchgehen, Bolzen und die entsprechenden Muttern sind.

3. Riemenbefestigung für Becherwerke nach einem der vorhergehenden Ansprüche, **dadurch gekennzeichnet, dass** das Ende des durch Stahlseile gebildeten Kerns (9) des Riemens an dessen Ende durch einen oder mehrere Bolzen (7) gehalten wird.

## Revendications

1. Attache de courroie pour élévateurs à godets qui a :
- Un verrou supérieur (1),
- Un verrou inférieur (2),
- Une pièce centrale (3) en forme de cale introduite à travers l'ouverture des extrémités des tronçons de la courroie (4) à attacher et placée entre les deux extrémités de celle-ci, l'ensemble entier, les verrous supérieur (1) et inférieur (2), les extrémités de la courroie (4) et la pièce centrale (3) étant fixés par des moyens d'attache qui passent à travers tous les éléments, **caractérisée en ce que** l'attache de courroie comprend un ensemble de serrage progressif basé sur l'utilisation d'une pièce excentrique (5),
dans laquelle ledit ensemble de serrage progressif comprend une pièce (6) disposée après la liaison formée par les pièces de verrouillage supérieure (1) et inférieure (2) et la pièce centrale calée (3) et qui a des bras (8) sur lesquels la pièce excentrique (5)
tourne et qui en tournant, presse et serre l'âme (9) de la courroie entre la pièce (6) et la pièce excentrique (5).

2. Attache de courroie pour élévateurs à godets selon la revendication 1, **caractérisée en ce que** les moyens d'attache qui passent à travers les pièces et la courroie d'attache sont des boulons et les écrous correspondants de ceux-ci.

3. Attache de courroie pour élévateurs à godets selon l'une quelconque des revendications précédentes, **caractérisée en ce que** l'extrémité de l'âme (9) de la courroie, formée par des câbles en acier, est retenue à l'extrémité de celle-ci par un ou plusieurs boulons (7).
